# EUROPEAN PATENT APPLICATION

(11) **EP 4 838 314 A1**
(43) Date of publication of application: **11.11.2026**
(21) Application number: 25174555.0
(22) Date of filing: 06.05.2025
(51) Int. Cl.: G05B 13/02, B29C 65/02, B29C 65/00, G05B 19/418, G06T 7/62

(54) **A PROCESSING AND CONTROL DEVICE FOR A TUBE MANUFACTURING DEVICE**

(71) Applicant: EPL Poland sp. z o.o., 61-858 Poznan (PL)
(72) Inventor: Sosnicki, Tomasz, 30-059 Krakow (PL); Dworczak, Jacek, 61-858 Poznan (PL); Andrasz, Grzegorz, 61-858 Poznan (PL); Rzecki, Krzysztof, 30-059 Krakow (PL)
(74) Representative: Studio Torta S.p.A.

(57) **Abstract**

The invention relates to a processing and control device (30) for a tube manufacturing device (100) producing tube bodies (20) by side seaming a preferably endless web of material based on a set of device process parameters, the processing and control device (30) comprising:
an input data interface (31) configured for interacting with the tube manufacturing device (100) and for providing at least image data (40) relating to a cut section (21a,b) of a seam region (10) of the tube bodies (20) manufactured by the device (100),
a data processing unit (32) configured for processing the image data (40) together with additional process data (41) encompassing device process parameters (41a) and/or optional tube body test data (41b), and for calculating a classification outcome (42) based on the analyzed data, and
a control unit (33) configured for processing the classification outcome (42) and for controlling the tube manufacturing device (100) dependent on the classification outcome.

## Description

The present invention relates to a processing and control device for a tube manufacturing device, the device comprising a data processing unit configured for processing captured image data together with additional process data and for calculating a classification outcome thereon.

Devices for manufacturing packaging tubes or tubular bodies, particularly for use in the cosmetics, personal care, and related industries are known in the prior art. In general, these manufacturing devices are designed for producing tubular bodies or tube bodies from an endless web of one or more materials in a continuous process. This process may involve the steps of forming the endless web into a tubular shape, e.g. by forming it about a mandrel, hereby, bringing opposing longitudinal edges of the endless web together, with or without overlap, joining these edges together for example by means of welding in order to form an endless tubular sleeve with a seam, cutting this endless tubular sleeve in predefined sections in order to form individual tubular bodies of predefined length and optionally joining outlet elements such as a head and/or shoulder element to one end of the individual tubular bodies.

Traditional methods of producing packaging tubes often involve separate or semi-integrated systems for forming the tube body, affixing the head, and ensuring proper sealing. These processes can suffer from misalignments, material inconsistencies, and dimensional inaccuracies, leading to increased waste and higher production costs. Additionally, the rising need for customizable designs and materials, including eco-friendly and recyclable options, poses further challenges to existing manufacturing technologies.

A key factor affecting the quality of the packaging created with such tube bodies is the quality of the created seam, which is dependent on a variety of variables in the production process such as the velocity of endless sleeve, parameters of the joining of the material, and parameters of the cutting process.

Assessment of the seam quality is traditionally performed by human inspection, in particular via removal of tube bodies from the device after they have been cut from the endless sleeve, whereby the inspections may comprise inter alia visual assessments, thickness and/or width measurements, burst tests, and/or drop tests. This approach is however cumbersome and brings about disadvantages such as a low response to possible quality issues and thus a lower efficiency of the manufacturing process as well as the possibility of human errors. It is therefore desirable to enable a more autonomous assessment of the manufactured product and in particular the seam quality.

An automatic assessment of the seam quality has historically been difficult because many features contribute to the overall seam quality by varying degrees, such that programmatic algorithms, which cannot generalize well to cover all possible variations, are difficult to apply. Also, image processing required for such automatic assessment is very difficult during live production due to various factors, comprising inter alia the presence of machine components in the production line that obscure the formation of the seam, the difficulty of image capturing in particular of miniature features of a seam at high production speed and/or during continuous formation of the tubular sleeve or the tube bodies, the problem of effectively deriving relevant parameters from the captured images, and the problem of adaption to different tube material, tube sizes and/or seaming techniques.

WO 2024/079709 relates to a method for seam-welding a sheet in order to form a tubular body, the method relating to a real-time self-adaptive regulation of the welding parameters, based on in-line measurements of one or more characteristics of the seam weld during production and without stopping the machine. The measured characteristics of the weld may include the thickness or the width of a welded zone or features of aesthetic nature such as the absence of visual defects like air bubbles or cavities. Hereby, the variations of these welding characteristics are determined by comparison with reference characteristics and the adaptive regulation of the welding parameters is based on a digital model simulating the welding device.

EP 3 991 950 A1 relates to a method and apparatus for controlling a weld in an article made of a polymeric material based on an image analysis of the weld zones, wherein the method comprises the steps of acquiring an image of at least a portion of the article, processing the acquired image represented by a pixel matrix wherein intensity levels of each pixel are assessed to determine a quality parameter of the weld.

EP 4417934 A1 relates to a system and method for assessing the quality of a weld via an image of the end of the tubular body/pipe, where the cross-section of the weld is visible in the image. Hereby, the system and the method are specifically addressing the identification of a misalignment in the weld, wherein a secondary marker plate is provided to serve as a reference within the image.

Based on the known prior art, the present invention aims to provide an improved processing and control device for a tube manufacturing device, in particular a processing and control device that enables an optimized control and a higher efficiency of a manufacturing process carried out by a tube manufacturing device.

This object is solved by the subject-matter of the independent claim. The dependent claims relate to advantageous embodiments of the present invention. The present invention further seeks to address additional objects as will be apparent from the following detailed description of the invention.

In a first aspect, the invention relates to a processing and control device for a tube manufacturing device producing tube bodies by side seaming a preferably endless web of material based on a set of device process parameters, the processing and control device comprising an input data interface configured for interacting with the tube manufacturing device and for providing at least image data relating to a cut section of a seam region of the tube bodies manufactured by the device, a data processing unit configured for processing the image data together with additional process data encompassing device process parameters and/or optional tube body test data, and for calculating a classification outcome based on the analyzed data, and a control unit configured for processing the classification outcome and for controlling the tube manufacturing device dependent on the classification outcome.

The invention enables an efficient and optimized assessment of the quality of tube bodies manufactured by a tube manufacturing device to which the processing and control device is connected. Hereby, the assessment is based on image data that is collected autonomously during the manufacturing process such that a human expert is not required, thus enabling costs savings and minimization of risks for human errors. Moreover, the analysis of image data relating to cut sections of the respective tube bodies enables a very accurate assessment of the quality of the formed product and in particular of a seam region within the cut section. Processing this highly significant image data together with additional process data encompassing device process parameters and/or optional tube body test data and calculating a classification outcome based on the analyzed data, enables a highly efficient data analyzation process in order to inter alia identify deviations from a previously specified product design, to improve manufacturing accuracy, and/or to ensure product consistency. Hereby, correlations between features of the image data relating to the cut section of the seam region, and other data including data e.g. generated by other testing devices, enable the creation of a valuable dataset which may be used to effectively control a tube manufacturing device. Furthermore, the invention enables the effective control of a tube manufacturing device with a a wide variety of tube sizes, materials and manufacturing techniques.

The term "cut section" refers to the specific cross-sectional area of an endless tubular sleeve or tube body that is created or exposed as a result of a cutting process of an endless tubular sleeve formed from the preferably endless web of material. When the tubular sleeve is cut, i.e. fully severed, the cut section represents the surface of the material that forms the boundary of the cut edge. The cut section lies preferably in a plane perpendicular to the axial direction the tube body.

The term "endless tubular sleeve" refers to a continuous, cylindrical structure formed when two opposing lateral portions, or edges, of the at least one endless web of material are brought together and connected along their length in a tube manufacturing device. The tubular sleeve serves as the base structure for further processing and in particular cutting of the sleeve into tube bodies of predefined length.

The term "seam region" refers to the specific area where two opposing portions or edges of the material, or more specifically of the at least one endless web of material have been joined during the manufacturing process, in particular by a side seaming unit. This region thus represents the connected and in particular the welded section that ensures the structural integrity and continuity of an endless tubular sleeve and thus of the individual tube bodies cut from the sleeve.

The term "processing data" refers to performing operations on the respective data, which include at least analysing, evaluating, manipulating and/or calculating the data. The term "processing the image data together with additional process data" refers to an operation in which the image data and the additional process data are processes at least in part together and/or dependent of each other.

In a preferred embodiment, the additional process data encompasses stored empirical process data, current device process parameters and/or target device process parameters. This data may be provided or supplied by the input data interface and/or an associated storage unit. An associated storage unit may be an internal or external database. An external database hereby preferably comprises a remote database server connected to the device via a dedicated network connection. The current device parameters refer to parameters of the tube manufacturing device which are currently applied in order to control the device. Target device parameters refer to parameters of the tube manufacturing device which may be set or controlled by the device, e.g. in order to obtain a predefined outcome or product quality.

The current and/or target device parameters preferably comprise one or more of the following: control parameters for a heating power for a side seamer unit and/or for a manufacturing speed of a tube manufacturing device, a mechanical pressure onto a seam region or seam during welding and/or gluing, a mechanical pressure onto a seam region or seam during cooling, a web inlet position relating to a position of the web with respect to a seaming mandrel, a web width settings relating to a parameter for a side trimming of the material web, and/or a side trimming position.

In a preferred embodiment, the tube body test data may encompass one or more of the following: burst test data of tube bodies and/or a seam region of the tube bodies, mechanical stability results such as bending test results, and/or tension test results, manual seam thickness measurements, visual occurrence assessments, and/or microscope image assessments

The data processing unit preferably comprises a feature extraction algorithm for processing the image data together with the additional process data to extract features relating to specific characteristics of the seam region from the image data. The data processing unit is preferably configured to run such feature extraction algorithm, e.g. via a dedicated processor and/or an associated data storage means.

The feature extraction algorithm is preferably configured for extracting one or more features which relate to dimensional measurements and/or structural parameters derivable from the provided image data, and in particular of dimensional measurements and/or structural parameters of a cut section of a seam region of the tube bodies. The features may comprise one or more of the following:
an overlap length, relating to the width of a seam overlap, measured between ends of an upper and lower overlapping portion,
a lower distance relating to the distance between a start of the seam and an end of a lower overlapping portion,
an upper distance, relating to a distance between an end of the seam and an end of the upper overlapping portion,
a lower overlap height, relating to a height of a lower overlapping portion measured in the middle of an overlap length;
an upper overlap height, relating to the height of an upper overlapping portion measured in the middle of an overlap length;
an upper overlap closure, relating to a position of an end of an upper overlapping portion; and/or
a lower overlap closure, relating to a position of an end of a lower overlapping portion; and/or upper overlap deformation.

In a preferred embodiment, the feature extraction algorithm may be designed to carry out a predefined set of steps, comprising one or more of the following:
- cropping of the received image data to just the area of interest, preferably the cut section of the seam region,
- performing edge detection to identify the contours of the seam region revealed in the cut section,
- identifying a set of areas of the image which contain relevant information characteristic of the seam region, based on the identified edges, and/or
- performing pixel-based measurements of the image features within the areas, to output a set of features.

The feature extraction algorithm is preferably designed to output the extracted and/or identified features in form of one or more feature vectors for further processing. Furthermore, the device, or specifically the processing unit of the device, may be configured for analyzing one or more successive instances of image data, thereby preferably calculating feature values as an average over multiple instances of image data, e.g. from 50 to 100 successively captured image data instances. Accordingly, the features may not only be extracted from a single image captured, but also from a series of images successively captured during a production of the tube bodies by the manufacturing device.

The data processing unit preferably further comprises a preferably machine-learning based classification unit, configured for processing features extracted from the image data and calculate a classification outcome based on the extracted features. The classification unit preferably comprises a neural network for generating classification outcomes when provided with features as an input. The neural network may be a pre-trained neural network which has been pre-trained in a supervised or unsupervised manner and/or wherein data sources may have been used as label data, including human expert label data, additional test data, and/or other data.

The classification unit preferably further comprises one or more training algorithms configured for training the classification unit in advance of normal operation of the tube manufacturing device, wherein the training algorithms are preferably further designed to periodically re-train the classification unit, based on data, e.g. encompassing image data, additional test data and process parameters retrieved during normal operation of the tube manufacturing device, such that the classification unit becomes more accurate over time.

The classification outcome provided by the classification unit preferably comprises one or more of the following:
- a binary good/poor classification, indicating whether the seam region in any given example of image data is of acceptable quality or not,
- a multivariable binary classification, indicating, for example, for one or more features of the manufactured tube bodies, whether each individual tube body is acceptable or not,
- a non-binary value or "score", e.g. a value between 0 and 1, scoring the overall quality of the seam region and/or of the tube body, and/or
- a multivariable non-binary classification, e.g. a value between 0 and 1 scoring quality of one or more individual features of the manufactured tube bodies.

The control unit of the device is designed for processing the classification outcome and for controlling the tube manufacturing device dependent on the classification outcome. Hereby, the control unit of the device preferably comprises one or more process parameter adjustment algorithms for adjusting current process parameters and/or for outputting target process parameters of the tube manufacturing device based at least in part on the classification outcome.

In a preferred embodiment, the process parameter adjustment algorithms comprise at least one of the following of
- a neural network which has been pre-trained for generating modifications to process parameters of the tube manufacturing device based on an input of a classification outcome, alongside inputs of other data that may be available, e.g. current process parameters, additional test data,
- a heuristic algorithm, e.g. a so called "greedy algorithm", which may be pre-defined to find improved but non-optimal process parameters given the current classification outcome and current process parameters, and/or
- an empirical model or digital twin of the tube manufacturing device, where the relationships between variables of the empirical model or digital twin are preferably associated with classification outcomes in a prior training phase.

In a further preferred embodiment, the control unit of the device comprises a warning trigger algorithm which is configured for outputting a warning signal e.g. to a user interface of the device, dependent on a classification outcome. The warning trigger algorithm may e.g. be configured to output a visual and/or audible warning to a human operator of the manufacturing device via a provided human-machine interface, in case the classification outcome deviates from predefined tolerance values and/or in case a classification is changing over time, e.g. is getting worse within a predefined time period, and/or e.g. a consistent binary "bad" classification outcome is provided.

In a preferred embodiment, the warning trigger algorithm may comprise a machine-learning based algorithm or a non-adaptive programmatic algorithm. Further, the warning trigger algorithm may be configured to run on multiple successive generated classification outcomes, in order to enhance its analysis.

In a further preferred embodiment, the control unit of the device comprises a tube rejection algorithm, which is configured for outputting a rejection signal for a particular tube body or series of tube bodies to the tube manufacturing device, dependent on a predefined classification outcome. Hereby, the tube rejection algorithm may comprise a trained machine learning algorithm, or any kind of non-adaptive programmatic algorithm.

In a further aspect, the invention relates to a method for controlling a tube manufacturing device, in particular by a dedicated processing and control device, the method comprising the steps of:
- providing input data comprising at least image data relating to a cut section of a seam region of tube bodies manufactured by the manufacturing device to a data processing unit,
- providing process data encompassing device process parameters of the tube manufacturing device and/or optional tube body test data to the data processing unit,
- processing the image data together with additional process data and calculating a classification outcome based on this data,
- processing the classification outcome by a control unit and controlling the tube manufacturing device dependent on the classification outcome.

In order to avoid unnecessary repetitions, full reference is made to the disclosure of the processing and control device according to the invention hereabove, wherein all features disclosed in the context of the device of the invention shall be understood as being also disclosed for the method of the invention and vice versa.

In a particularly preferred embodiment, the method comprises the step of controlling the tube manufacturing machine by selectively adapting a set of current device process parameters and/or outputting a set of target device process parameters responsive to classification data calculated based on the provided input data.

In a further aspect, the invention relates to a tube manufacturing machine for providing tube bodies from a preferably endless web of tube material by side seaming of the tube material and cutting an endless tubular sleeve into tube bodies of predetermined length, the tube manufacturing machine comprising a process and control device or unit as described above.

The tube manufacturing device to which the processing and control device according to the invention may be connected or of which the processing and control device may form a dedicated control unit, preferably comprises
- a supply unit for feeding one or more endless webs of tube material,
- a side seaming unit for connecting opposite lateral portions of the endless web under formation of a seam region in order to form an endless tubular sleeve,
- a cutting unit for cutting the endless tubular sleeve in tube bodies of predetermined length,
- an optional header unit for connecting the tube bodies to tube heads and/or shoulder parts, and/or
- a camera unit for capturing image data of the endless tubular sleeve and/or the tube bodies, the camera unit being arranged downstream of the cutting unit and designed to capture images of cut sections of the endless tubular sleeve and/or the tube bodies and to provide corresponding image data.

The supply unit of the device may comprise a mandrel or other formation means in order to form the at least one endless web into a tubular shape. The supply may comprise a plurality of supply or transport reels by means of which the at least one endless web is supplied to the device and/or transported within the device.

The side seaming unit of the device preferably comprises welding means which connect two opposite lateral portions of a tubular shape endless web. The side seaming unit is preferably designed to contact the at least one endless web by means of welding, soldering, gluing, punching and/or stitching. In a particular preferred embodiment, the side seaming unit is designed to connect the two lateral portions via welding a continuous stripe in which the two lateral portions overlap. Alternatively, the two lateral portions may be joined or welded together via butt-welding.

The cutting unit of the device preferably comprises one or more blade elements that are arranged to repeatedly cut a longitudinal tubular portion of the endless tubular sleeve, thereby forming successive tube bodies of predefined length which can then further be processed within the device.

The optional header unit is preferably designed to join a respective tube body to a tube head and/or a shoulder part which may be fed to the header unit from a respective supply unit of the device.

The camera unit of the device preferably comprises at least one or more image capturing devices capable of capturing images or capturing or recording video images. The at least one image capturing device preferably comprises a digital camera with a CCD or CMOS imaging sensor. The camera unit may be designed for monochrome or colour imaging. The camera preferably comprises a high resolution and light sensitivity. The camera unit preferably comprises an optical assembly having a lens system with adjustable focal length and aperture for capturing images under varying lighting and distance conditions. The aperture and/or shutter of the camera unit may be designed for high speed actuation, comprising a preferred shutter time of between 10us and 1ms.

In a preferred embodiment, the lens of the digital camera has a fixed focal length. The optical assembly may comprise filter means, e.g. for spectral imaging. Further, the camera unit may comprise a macro-objective designed for capturing high resolution images. Further, the camera unit is preferably configured to capture images in real-time and provide the respective image data to the processing and control unit, allowing for immediate feedback and control within the production process. The camera unit preferably further comprises software and/or hardware components designed for delivering instructions to the image capturing devices, for example to capture image data, as well as for performing any required initial processing of the image data.

In a preferred embodiment, the camera unit is arranged to capture at least one image of a respective cut section at a front portion and/or the rear portion of each individual tube body. Further preferred, the camera unit is arranged to capture at least one image of a cross-section of the respective seam region in a front cut section and/or a rear cut section. This configuration enables the capturing of an unobscured, clear and detailed visual data of the front and/or rear portion, or more specifically, the cut section at the front and/or rear portion of each tube body as the tube body moves through the production line. By focusing on the front and/or rear portion, the camera unit provides precise and actionable data specific to this critical area of the tube body.

In a preferred embodiment, the camera unit is designed to operate synchronized with at least one further unit of the device, preferably at least with the cutting unit. Hereby, the camera unit may be designed to operate in such a way that the moment of image capturing *tₚ* by the camera unit is synchronized with the moment of cutting *t_{c}* carried out by the cutting unit. Preferably, the camera unit may be arranged to capture the image data dependent on an operation of the cutting unit and may particularly be designed to capture the image data before, during and/or after a cutting of each successive tube body is carried out by the cutting unit.

In a preferred embodiment, the device may further comprise a removal unit able to prevent tube bodies from being further processed in the device. Hereby, the removal unit is preferably designed to be controlled in response to a feedback or control signal of the processing and control unit. The removal unit may thus remove tube bodies that do not comply with predefined quality features and/or for which defects or undesired deviations are identified.

In a preferred embodiment, the device further comprises at least one lighting unit designed to illuminate the endless tubular sleeve and/or a respective tube body cut from the sleeve. Hereby, the lighting unit is preferably designed for illuminate specific sections of the tube body or tubular sleeve, in particular the cut sections, or more specifically, the cross-sections of the cut sections of the respective tube body for ensuring optimal conditions for image capturing by the camera unit.

The device may further comprise a human-machine interface, or alternatively named, a user interface, which is preferably for two-way interaction between a human operator and the tube manufacturing device. The interface is preferably designed to present warnings to a human operator, to present values such as current or historic classification outcomes, as well as current process parameters to a human operator, to present suggested new process parameters to a human operator, to allow a human operator to initiate the production process, and/or to allow a human operator to change process parameters.

The processing and control device is preferably designed to process the captured image data and to control the manufacturing process of the device based on the image data retrieved by the camera unit. In particular, the captured image data may be used by the processing and control unit in order to e.g. identify deviations from a previously specified design, to improve manufacturing accuracy, and/or to ensure product consistency.

A preferred embodiment of the method and process steps carried out by the tube manufacturing device is described in the following.

A human operator may initiate a tube manufacturing process, e.g. by using a provided user interface of the tube manufacturing device. The human operator may at this stage define an initial set of process parameters. Alternatively, the process may start with default values for the process parameters.

The supply unit of the device begins feeding of the one or more endless webs to the side seaming unit of the device. The side seaming unit connects the opposite lateral portions of the endless web to form the endless tubular sleeve upon creating of a seam region. The endless tubular sleeve is fed to the cutting unit at which it is cut into tube bodies of predetermined length. These steps of the supply unit, the side seaming unit and the cutting unit constitute the main production process steps of the tube manufacturing process and are repeatedly continued until actively stopped, either by another system component, or by a human operator.

Optionally, the tube bodies may be accelerated after the cutting, e.g. by means of a dedicated tube promoter unit. The tube promoter unit may perform the acceleration via blowing of air intermittently or by alternative means. This has the advantage that the camera unit of the device has a reliably clear view of the cut section of the front portion of the next tube body and/or the endless sleeve. The acceleration of the tube bodies is preferably synchronized with the cutting and/or camera unit.

At least one image is captured by the camera unit in order to retrieve corresponding image data of the cut sections. Hereby, the camera unit may capture image data of the cut sections of either end of a tube body, the cut section at the end of the endless sleeve, or both. The camera unit may further capture the image data in synchronization with the cutting unit, i.e. images are captured at a time which is a function of the cutting time, such that the cut section is in a specific position for image capture. The camera and/or mirrors of the camera unit may further be in motion during the capture of the image data, whereby said motion is preferably synchronized with the motion of the tube body and/or endless tubular sleeve. During the image capturing, the lighting unit may illuminate the cut surfaces during the capture of the image data. Thereby, the lighting unit may provide illumination continuously or may provide synchronize light emission with the capture of the image data.

Optionally, additional tests may be performed e.g. on the tube bodies and/or the endless tubular sleeve, such as e.g. burst tests, according to predefined protocols, and after which additional test data may be outputted. Specifically, in addition to a visual assessment of a seam region to determine its quality, other assessments may take place on the same production line to assess seam quality. For example, burst testing may be performed to determine the force at which the seam breaks, and, more specifically, if this burst force is within predefined acceptable ranges.

In an optional step, the manufactured tube bodies are passed to the optional header unit for connecting the tube bodies to tube heads and/or shoulder parts.

The captured image data together with additional process data, encompassing device process parameters and/or optional tube body test data are transmitted to the processing unit. The processing and control unit then processes the provided data, thereby generating a classification outcome, or alternatively named, a classification value. This may comprise the following steps:
A feature extraction algorithm runs on the image data and, if provided, the optional data to output a set of feature vectors. For example, the algorithm may follow a predefined set of steps, including:
- cropping of the received image data to just the area of interest (i.e. the seam region in the cut section, or more specifically, the captured cross-section,
- performing edge detection to identify the contours of the seam region revealed in the cut section,
- identifying a set of areas (i.e. regions of the image) which contain relevant information characteristic of the weld, based on the identified edges, and
- performing pixel-based measurements of the image features within the areas, to output the set of features.

For this feature extraction algorithm one or more instances of image data may be utilized here, such that the feature vectors may represent an average over many instances of image data.

Next, a classifier algorithm is preferably run on the feature vectors to output a classification outcome. The classification outcome may be e.g. a binary or non-binary classification value for either the tube bodies as a whole or specific features of the manufactured tube bodies. Based in the classification outcome the processing and control unit generates instructions for other units or entities of the tube manufacturing device to take any actions in response.

Optionally a processing parameter adjustment algorithm is run on the classification outcome to generate a set of modifications or target values to the process parameters of the manufacturing device. The current process parameters of the tube manufacturing device may then be updated to the new values. The modification of process parameters may thereby only be triggered once the classification outcome has reached a certain threshold, e.g. relating to a negative quality criterion or "badness", beyond which modifications must be made.

Optionally a warning trigger algorithm is run on the classification outcome to determine if a warning is necessary. If this is the case, a warning, e.g. in the form of a visual, audible and/or tactile warning signal or in any other suitable form, may be outputted to a human operator. Further, a classification outcome may be presented, e.g. visually displayed to a human operator of the device, in particular by means of a provided user interface.

Optionally, a reject tube algorithm may be initiated which controls the tube body rection unit, which is thus controlled to remove corresponding tube bodies from the production line.

The above-indicated process steps relate to a preferred embodiment and do not necessarily have to be carried out in the specific order indicated. In particular, the process steps may as well be carried out in a different order.

Further features, details and advantageous effects of the present invention are explained below with reference to exemplary and purely schematic embodiments of the invention.
- **Fig. 1**: relates to a schematic depiction of a possible embodiment of a tube manufacturing device that is preferably controlled by the process and control device according to the invention;
- **Fig. 2a,b**: relates to a top and side view of an endless web of material being forming into an endless tubular sleeve by the device according to fig. 1;
- **Fig. 3a,b**: relate to a side view and a front view onto a tube body manufactured by the tube manufacturing device according to fig. 1;
- **Fig. 4**: relates to a schematic depiction of the cutting unit in interaction with a camera unit of the device according to fig. 1;
- **Fig. 5**: relates to a side view onto the camera unit of the device according to fig. 1.
- **Fig. 6**: relates to a purely schematic depiction of the process and control device according to the invention;
- **Fig. 7a,b**: relate to schematic depictions of features extracted from image data relating to a seam cut section of a tube body manufactured by a tube manufacturing device according to fig. 1

In the following Identical elements or elements with the same function are referred to by the same reference symbols in the figures.

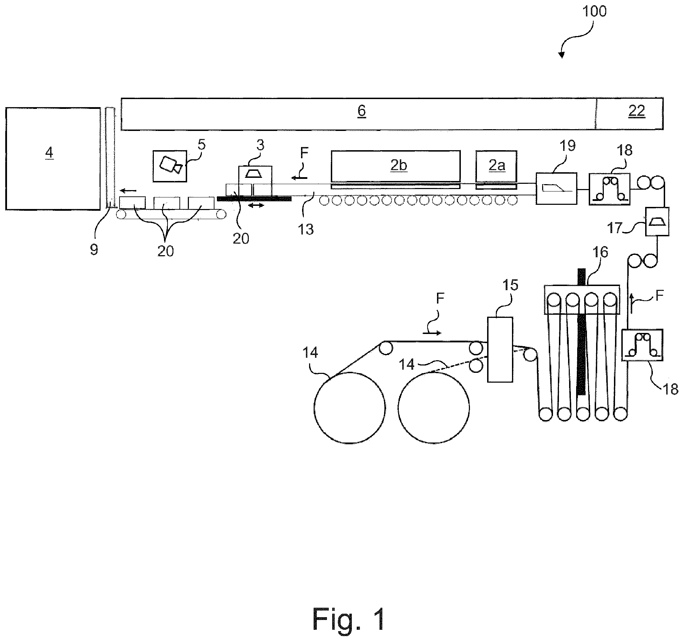

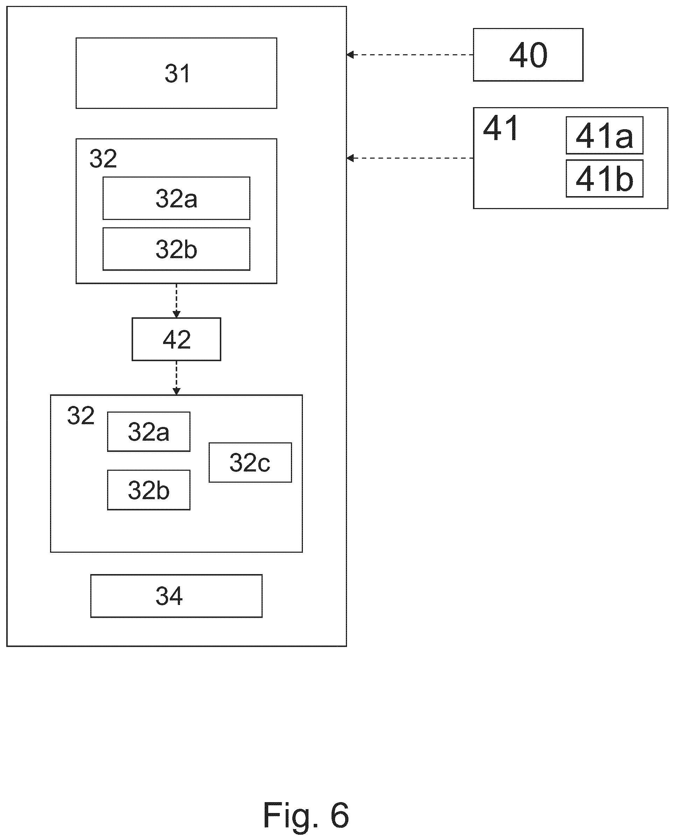

**Fig. 1** relates to a schematic depiction of a preferred embodiment of a tube manufacturing device 100 which may be controlled by the processing and control device 30 according to the invention (see **Fig. 6****).** The device 100 comprises a supply unit 1 for feeding one or more endless webs of tube material 14, e.g. a plastic, metal, textile or laminate web, to the device. Hereby, the tube material 14 is driven in a conveying direction.

The supply unit 1 may further comprise a splicing station 15 for joining the end of an expiring material web 14, e.g., an endless strip of material, to the beginning of a new material web. Further, the supply unit 1 may comprise accumulator station 16 for temporarily storing and managing material, ensuring continuous operation during processes such as material roll changes, splicing, or other temporary disruptions, thereby acting as a buffer system that maintains the flow of material or tube bodies without stopping or slowing down the entire production line. The supply unit 1 may further comprise a trimming station 17 for precisely cutting or smoothing the lateral edges of a material web 14 before it is further processed. The supply unit 1 may further comprise alignment stations 18 for ensuring that the material is precisely and correctly positioned as it enters the subsequent production process.

The supplied material is fed to a forming station 19 which is designed to shape or form the flat material web 14 into a desired cylindrical or tube-like shape that serves as the basis for the final tube body.

The device 100 further comprises a side seaming unit 2 downstream of the forming station 19 and designed for connecting opposite lateral portions 12a,b of the endless web 14 under formation of a seam region 10 in order to form an endless tubular sleeve 13. Notably, the forming station 19 may as well be part of the side seaming unit 2. The seaming unit 2 preferably comprises a welding device 2a for welding the two opposite lateral portions 12a,b. Downstream of the welding device 2a, the seaming unit 2 preferably comprises a cooling device 2b for cooling the welded zone, or alternatively phrased, the created seam region 10.

The device 100 further comprises a cutting unit 3 for cutting the endless tubular sleeve 13 in tube bodies 20 of predetermined length. The cutting unit 3 preferably comprises at least one cutting device such as a rotary cutting knife. The cutting unit 3 and/or its cutting device are preferably designed such that they move relative to the continuously fed endless tube 13 in at least one section of the production line, in particular perform a translatory movement M1.

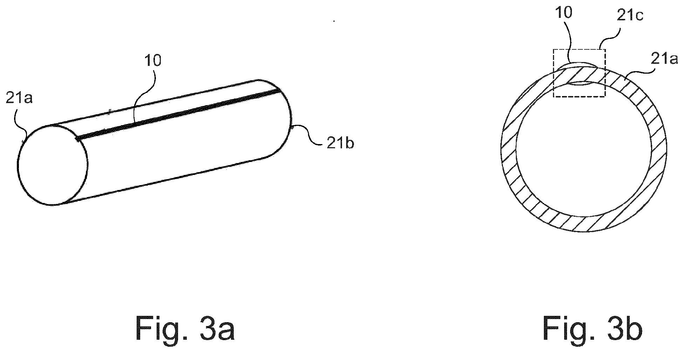

Downstream of the cutting unit 3, the device 100 further comprises a camera unit 5 designed to capture images of cut sections 21a,b (see e.g. Fig. 3a,b) of the endless tubular sleeve 13 and/or the tube bodies 20 and to provide corresponding image data.

The manufactured tube bodies 20 may then be conveyed from the cutting unit 3 to an optional header unit 4 for connecting the tube bodies 20 to tube heads and/or shoulder parts (not shown).

The device 100 may further comprise a user interface 22, such as a graphical interface or a screen with associated input and/or output devices, thereby constituting a human-machine interface. The user interface 22 may be part of the processing and control unit 30 and/or may be provided as a separate and/or mobile entity.

The device 100 preferably further comprises a removal unit 9 able to prevent tube bodies 20 from being further processed in the device 100, the removal unit 9 being designed to be controlled in response to a feedback signal e.g. of the processing and control device 30.

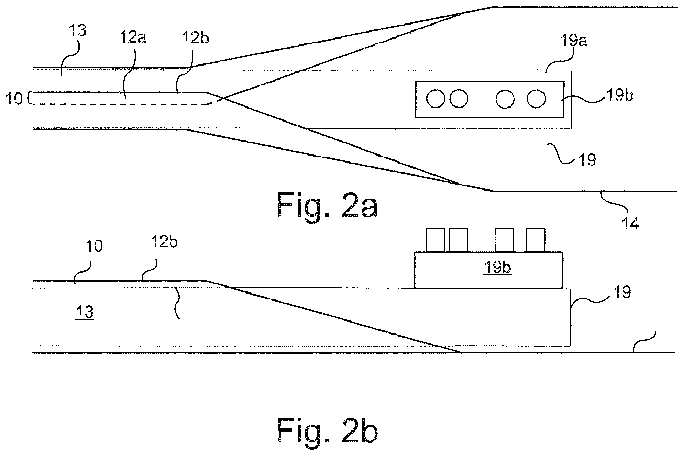

**Fig. 2a,2b** relate to a top and side view onto a schematic representation of the forming station 19 which is designed to shape or form the flat material web 14 into a desired cylindrical or tube-like shape, whereby the opposite lateral portions 12a,b of the endless web overlap in top view.

The forming station 19 preferably comprises a mandrel 19a extending in the longitudinal direction of the cylindrical tubular sleeve 13 to be formed, whereby it is supported in the device by means of a dedicated suspension or support device 19b.

The overlapping lateral portions 12a,b are then joined by the side seaming unit 2 (not shown in fig 2a,b), thereby forming the seam region 10.

**Fig. 3a** shows a manufactured tube body 20 with a seam region 10 extending in longitudinal or, alternatively phased, axial direction of the tube body 20. At the front end, the tube body 20 comprises a front cut section 21a. At the opposing rear end, the tube body 20 comprises a rear cut section 21b. These cut sections 21a,b thereby refer to the specific cross-sectional area of an endless tubular sleeve 13 or tube body 20 that is created or exposed as a result of a cutting process of the endless tubular sleeve 13. As shown in **Fig. 3b****,** a portion 21c of the respective cut sections 21a,b relates to the cross-sectional area of the seam region 10.

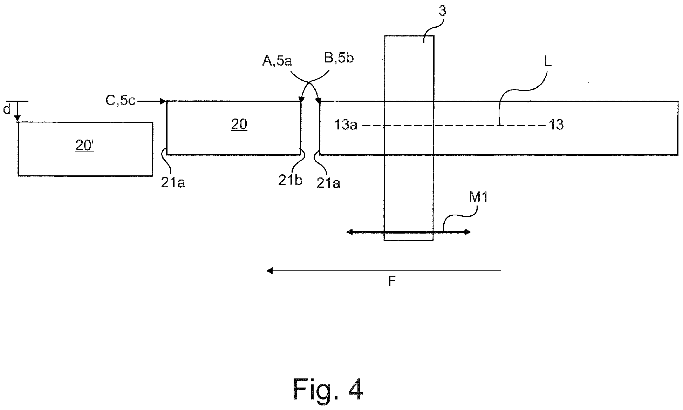

**Fig. 4** relates to a schematic arrangement of the cutting unit 3 with respect to the camera unit 5. As shown in this figure, the endless tubular sleeve 13 is continuously fed to the cutting unit 3 in conveying direction F. The cutting unit 3 thereby undergoes a translational movement back and forth along the tubular sleeve 13, parallel to the conveying direction F, thereby operating at least one cutting device such as a rotary blade (not shown) in order to cut tube bodies 20 of predefined length from a front portion 13a of the endless tubular sleeve 13. The shown tube bodies 20,20' in this figure relate to successive tube bodies cut from the endless tubular sleeve 13 and which are further conveyed in conveying direction F of the device 100 after cutting. As also shown in the figure, tube body 20' may be slightly deflected from the conveying direction F, and may e.g. drop a predefined distance d in side view, compared to the following tube body 20, e.g. in order to provide a clear view of the camera unit 5 onto the front portion of the successive tube body 20 (see arrow C).

The arrows A,B,C in this figure relate to preferred camera positions or possible capturing directions of the camera unit 5 for capturing images of cut sections 21a,b of the endless tubular sleeve 13 and/or the created tube bodies 20.

For example, arrow A relates to a camera capturing direction wherein the camera unit 5 is arranged to capture an image of the front portion 13a of the endless tubular sleeve 13. The camera unit 5 may hereby be arranged slightly inclined downwards onto the production line, or more specifically, onto an longitudinal or axial direction L of the endless tubular sleeve 13. The camera unit thereby captures an image of a front cut section 21a of the front portion 13a of the endless tubular sleeve 13.

Arrow B relates to a camera capturing direction wherein the camera unit 5 is arranged to capture an image of the rear portion of the manufactured tube body 20, cut from the front portion 13a of the endless tubular sleeve 13. The camera unit 5 may hereby be arranged slightly inclined downwards onto the production line, or more specifically onto a longitudinal or axial direction L of the endless tubular sleeve 13 or of the tube body 20. The camera unit thereby captures an image of a rear cut section 21b of the tube body 20.

Arrow C relates to a camera capturing direction wherein the camera unit 5 is arranged to capture an image of the front portion of the manufactured tube body 20, cut from the front portion 13a of the endless tubular sleeve 13. The camera unit 5 may hereby be arranged to directly face the tube body 20 in longitudinal or axial direction L. The camera unit thereby captures an image of a front cut section 21a of the tube body 20.

The described capturing directions A,B,C are preferred examples for an arrangement of the camera unit 5 with of individual image capturing devices 5a,b,c of the camera unit 5 with respect to the cutting unit 3 and the cut tube bodies 20. The camera unit 5 may as well be arranged differently with respect to the endless tubular sleeve 13 and/or the cut tube bodies 20. Moreover, the camera unit may as well comprises one or more mirrors (not shown) for redirecting and/or deflecting light, i.e. the described capturing directions A,B,C, from the cut sections 21a,b to the respective individual image capturing devices 5a,b,c of the camera unit 5. Further, the camera unit 5 may comprise more or fewer image capturing devices 5a,b,c. Particularly preferred, the camera unit 5 is arranged to capture at least a portion 21c of the respective cut sections 21a,b relating to the cross-sectional area of the seam region 10 as shown in fig. 3b.

The camera unit 5, or, more specifically, the individual image capturing devices 5a,b,c of the camera unit 5, are designed to operate synchronized the cutting unit 3 in such a way that the moment of image capturing *tₚ* by the respective mage capturing devices 5a,b,c of the camera unit 5 is synchronized with the moment of cutting *t_{c}* carried out by the cutting unit 3. Hereby, the individual image capturing devices 5a,b,c of the camera unit 5 may capture the image data dependent on an operational state of the cutting unit, in particular before, during and/or after a cutting of each successive tube body 20 is carried out by the cutting unit 3.

In addition, the camera unit 5 may be designed to capture an image data of the tube body 20 when being transferred to the optional header unit 4 of the device 100. The camera unit 5 may further comprise an additional image capturing device (not shown) designed to capture secondary image data in particular of a seam side surface, e.g. in top view onto the seam region 10, perpendicular to the axial direction L, for the detection of printing defects such as cracks or other surface defects.

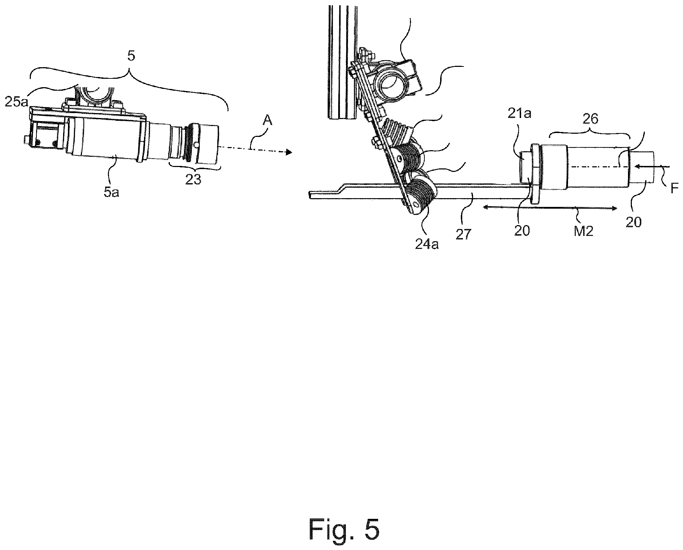

**Fig. 5** relates to a side view onto the camera unit 5 of the device 100. The camera unit 5 comprises an image capturing device 5a, in particular a digital camera or digital video camera. The camera unit 5 may further comprise a lens system 23 with one or more lenses having a focal length suited for capturing images of features on or near to the cut sections 21a,b of the endless tubular sleeve 13 and/or the tube body 20. An image capturing path A of the camera unit 5 is slightly inclined downward relative to a longitudinal axis L of the tube body 20.

The device 100 may further comprise a lighting unit 24 designed to illuminate the endless tubular sleeve 13 and/or a respective tube body 20 cut from the sleeve 13, preferably the cut sections 21a,b thereof. The lighting unit 24 may comprise one or more illumination elements 24a-d which may comprise one or more LEDs, OLEDs, laser diodes, filament bulbs or any other suitable light-emitting elements. Thereby, the lighting unit 24 may be designed for providing stroboscopic lighting for capturing high-speed images, colour-adjustable lighting for enhanced contrast, and/or polarized light to reduce glare on reflective surfaces. The lighting unit 24 may further comprise diffusers and/or an optical lenses (not shown) in order to provide for even light distribution and/or to control the direction, angle, and/or intensity of the emitted light.

The camera unit 5 and/or the lighting unit 24 are preferably mounted within the device 100 by dedicated mounting devices 25. The mounting devices 25a,b may be designed for providing a stable arrangement and/or a movement, such as e.g. a translatory and/or rotational movement of the respective entity mounted thereon. Hereby, the mounting devices 25a,b may comprise dedicated rails, tracks, pivot points, and/or motorized actuators.

As shown in the right portion of fig. 5, a tube body 20 cut from the endless tubular sleeve 13 is provided from the cutting unit 3 in conveying direction F of the manufacturing process. The tube body 20 is thereby fed through a tubular support section 26. At the shown position, the camera unit 5 captures an image of the front cut section 21a of the tube body 20, and more preferably at least of a portion 21c of the respective cut sections 21a relating to the cross-sectional area of the seam region 10 as shown in fig. 3b.

The tubular support section 26 is connected to a guiding tray 27 into which the tube body 20 is fed in conveying direction F, preferably after capturing of the image data by the camera unit 5. The tubular support section 26 and the guiding tray 27 may be intermittently moved back and forth along direction M2, in parallel to the conveying direction F.

Upon leaving the support section 26, for example due to the next incoming cut tube body 20 and/or due to the intermittent movement of the tubular support section 26, the tube body 20 is transferred to the guiding tray 27, in which the tube body 20 is preferably arranged offset from an axial direction L of the tube body 20 in the support section 26. In particular, the tube body 20 may drop by a distance d (see indication in Fig. 4), e.g. in order to enable a free view of the camera unit 5 onto the front cut section 21a of the next tube body 20 held within the support section 26.

Feeding of the tube bodies 20 in the support section 26 and/or in the guiding tray 27 may be additionally supported by dedicated acceleration means (not shown), such as e.g. an air vent or a similar entity, which is designed to intermittently provide an air stream onto the respective tube body 20, thereby moving and/or accelerating the tube body 20 in conveying direction F within the tubular support section 26 and/or the guiding tray 27.

**Fig. 6** relates to a schematic depiction of the processing and control device 30 according to the invention, which is designed to control a tube manufacturing device 100 producing tube bodies 20 by side seaming a preferably endless web of material 13 based on a set of device process parameters, such as e.g. the device 100 previously described with reference to Fig. 1-5.

The processing and control device 30 comprises an input data interface 31 configured for interacting with the tube manufacturing device 100 and for providing at least image data 40 relating to a cut section 21a,b of a seam region 10 of the tube bodies 20 manufactured by the device 100.

The device further comprises a data processing unit 32 configured for processing the image data 40 together with additional process data 41. The additional process data 41 comprises device process parameters 41a and/or optional tube body test data 41b, such as e.g. burst test data of tube bodies and/or a seam region of the tube bodies, mechanical stability results such as bending test results, and/or tension test results, manual seam thickness measurements, visual occurrence assessments, and/or microscope image assessments. The additional process data 41 may as well encompass stored empirical process data, current device process parameters and/or target device process parameters, which data may be provided via the input data interface 31 and/or an associated storage unit such as an internal or external database.

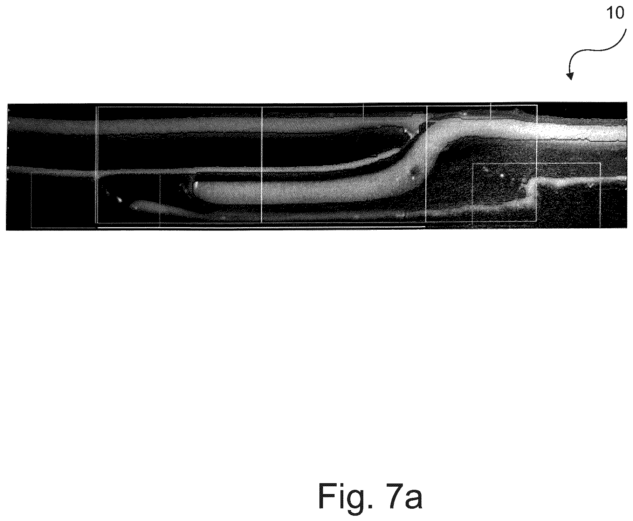

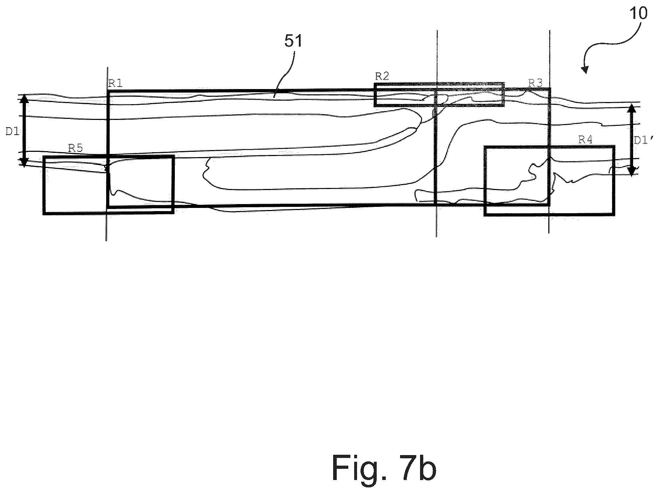

For processing the image data 40 together with additional process data 41, the data processing unit 32 preferably encompasses a feature extraction algorithm 32a for processing the image data 40 together with the additional process data 41 in order to extract features relating to specific characteristics of the seam region 10 from the image data 40. These features may relate to a variety of different dimensional measurements and/or structural parameters, as will be described with reference to **Fig. 7a****,b** further below.

The feature extraction algorithm 32a is preferably configured for outputting a respective feature vector for further processing by a classification unit 32b of the data processing unit 32. The classification unit 32b is configured for processing features extracted from the image data 40 and calculate a classification outcome 42 based thereon. The classification unit 32b thereby preferably comprises a neural network that is preferably pre-trained in a supervised or unsupervised manner for generating classification outcomes when provided with features as an input.

The resulting classification outcome 42 may, for example, comprises a binary good/poor classification, indicating whether the seam region in any given example of image data is of acceptable quality or not, a multivariable binary classification, indicating, for example, for one or more features of the manufactured tube bodies, whether each individual tube body is acceptable or not, a non-binary value or "score", e.g. a value between 0 and 1, scoring the overall quality of the seam region and/or of the tube body, and/or a multivariable non-binary classification, e.g. a value between 0 and 1 scoring quality of one or more individual features of the manufactured tube bodies.

The device 30 further comprises a control unit 33 configured for processing the classification outcome 42 and for controlling the tube manufacturing device 100 dependent on the classification outcome. Hereby, the control unit 33 preferably comprises one or more process parameter adjustment algorithms 33a for adjusting current process parameters and/or for outputting target process parameters of the tube manufacturing device 100 based at least in part on the classification outcome.

The process parameter adjustment algorithms 33a may comprise a neural network that has been pre-trained for generating modifications to process parameters of the tube manufacturing device 100 based on an input of a classification outcome 42, alongside inputs of other data that may be available, a heuristic algorithm which is pre-defined to find improved but non-optimal process parameters given the current classification outcome and current process parameters, and/or an empirical model or digital twin of the tube manufacturing device, where the relationships between variables of the empirical model or digital twin are preferably associated with classification outcomes in a prior training phase.

The control unit 33 may further comprise a warning trigger algorithm 33b which is configured for outputting a warning signal to a user interface of the device, dependent on a classification outcome.

The control unit 33 may further comprise a tube rejection algorithm 33c, which is configured for outputting a rejection signal for a particular tube body or series of tube bodies to the tube manufacturing device 100, dependent on a predefined classification outcome 42.

The device 30 preferably comprises an output interface 34 that is connected to the tube manufacturing device 100 and outputs dedicated control signals to respective components of the tube manufacturing device 100.

For example, the processing and control device 30 may e.g. identify tube bodies 20 of inferior quality and may control the removal unit 9 of the tube manufacturing device 100 in order to remove such tube bodies 20 from the production line. Further, the processing and control device 30 may adapt current process parameters of the manufacturing device 100 in order to e.g. address features and/or quality defects detected in the analysed data, in particular to improve manufacturing accuracy.

**Fig. 7a****,b** relate to a schematic depiction of image data 40 of the cut section 21a,b of a seam region 10 captured during the tube manufacturing process. Hereby, fig. 7a relates to a captured image wherein the feature extraction algorithm 32a has already carried out a cropping step in order to crop a captured image to the area of interests, in particular to the shown seam region 10.

Fig. 7b shown a state in which the feature extraction algorithm 32a has performed edge detection to identify the contours 51 of the seam region 10. Further, the feature extraction algorithm 32a identified a set of areas or regions of the image which contain relevant information characteristic of the weld, based on the identified edges. These regions are marked R1-R5 in the depicted image.

The feature extraction algorithm 32a is preferably further configured to performing pixel-based measurements of the image features within the areas, to output a set of features. Hereby, the feature extraction algorithm 32a carries out dimensional measurements in the provided image, indicated as parameters D1,D1', relating to an identified and/or measured seam thickness, and/or s1,s2,s3, relating to the horizontal positions of specific seam features in the image in the exemplary image.

Further, the identified and extracted dimensional measurements may comprise one or more of the following exemplary parameters: Overlap Length, relating to the width of a seam overlap, measured between ends of an upper and lower overlapping portion; Lower Distance relating to the distance between a start of the seam and an end of a lower overlapping portion; Upper Distance, relating to a distance between an end of the seam and an end of the upper overlapping portion; Lower Overlap Height, relating to a height of a lower overlapping portion measured in the middle of an Overlap Length; Upper Overlap Height, relating to the height of an upper overlapping portion measured in the middle of an Overlap Length; Upper Overlap Closure, relating to a position of an end of an upper overlapping portion; Lower Overlap Closure, relating to a position of an end of a lower overlapping portion; and/or Upper Overlap Deformation.

### Reference numerals

- 1: supply unit
- 2a,b: side seaming unit
- 3: cutting unit
- 4: header unit
- 5: camera unit
- 5a,b,c: image capturing device
- 9: removal unit
- 10: seam region
- 12a,b: opposite lateral portions
- 13: endless tubular sleeve
- 13a: front portion of tubular sleeve
- 14: endless web of tube material
- 15: splicing station
- 16: accumulator station
- 17: trimming station
- 18: alignment station
- 19a,b: forming station
- 20, 20': tube bodies
- 21a,b: cut sections
- 21c: cross-sectional area of seam region
- 22: user interface
- 23: lens system image capturing device
- 24: lighting unit
- 24a-d: illumination elements
- 25a,b: mounting devices
- 26: tubular support section
- 27: guiding tray
- 31: input interface
- 32: data processing unit
- 32a: features extract algorithm
- 32b: classification unit
- 33: control unit
- 33a: process parameters adjustment algorithm
- 33b: warning trigger algorithm
- 33c: tube rejection algorithm
- 34: output interface
- 40: image data
- 41: process data
- 41a: process parameter
- 41b: tube body test data
- 42: classification outcome
- 51: contours of captured images
- 100: tube manufacturing device
- A,B,C: camera capturing directions
- D: drop distance
- F: conveying direction
- L: longitudinal/axial direction
- M1: movement cutting unit
- M2: movement support section
- R1-5: regions of interest
- D1,D1': seam thickness
- s1,s2,s3: starting and end points of particular seam features

## Claims

1. A processing and control device (30) for a tube manufacturing device (100) producing tube bodies (20) by side seaming a preferably endless web of material based on a set of device process parameters,
the processing and control device (30) comprising:
an input data interface (31) configured for interacting with the tube manufacturing device (100) and for providing at least image data (40) relating to a cut section (21a,b) of a seam region (10) of the tube bodies (20) manufactured by the device (100),
a data processing unit (32) configured for processing the image data (40) together with additional process data (41) encompassing device process parameters (41a) and/or optional tube body test data (41b), and for calculating a classification outcome (42) based on the analyzed data, and
a control unit (33) configured for processing the classification outcome (42) and for controlling the tube manufacturing device (100) dependent on the classification outcome.

2. The processing and control device according to claim 1, wherein the additional process data (41) encompasses stored empirical process data, current device process parameters and/or target device process parameters.

3. The processing and control device according to claim 1 or 2, wherein the tube body test data (41b) encompasses burst test data of tube bodies and/or seam regions (10) of the tube bodies (20), mechanical stability results such as bending test results and/or tension test results, manual seam thickness measurements, visual occurrence assessments, and/or microscope image assessments

4. The processing and control device according to any of the preceding claims, wherein data processing unit (32) comprises a feature extraction algorithm (32a) for processing the image data (40) together with the additional process data (41) to extract features relating to specific characteristics of the seam region (10) from the image data.

5. The processing and control device according to claim 4, wherein the features relate to dimensional measurements and/or structural parameters derivable from the provided image data, comprising one or more of the following: Overlap Length, relating to the width of a seam overlap, measured between ends of an upper and lower overlapping portion; Lower Distance relating to the distance between a start of the seam and an end of a lower overlapping portion; Upper Distance, relating to a distance between an end of the seam and an end of the upper overlapping portion; Lower Overlap Height, relating to a height of a lower overlapping portion measured in the middle of an Overlap Length; Upper Overlap Height, relating to the height of an upper overlapping portion measured in the middle of an Overlap Length; Upper Overlap Closure, relating to a position of an end of an upper overlapping portion; Lower Overlap Closure, relating to a position of an end of a lower overlapping portion; and/or Upper Overlap Deformation.

6. The processing and control device according to claim 4 or 5, wherein the feature extraction algorithm (32a) may be designed to carry out a predefined set of steps, comprising one or more of the following:
- cropping of the received image data to just the area of interest, preferably the seam region (10),
- performing edge detection to identify the contours of the seam region (10) revealed in the Cross-Section,
- identifying a set of areas of the image which contain relevant information characteristic of the weld, based on the identified edges, and/or
- performing pixel-based measurements of the image features within the areas, to output a set of features.

7. The processing and control device according to any of claims 4 to 6, wherein the features may be output together in form of a vector for further processing, preferably by a classification unit (32b) of the data processing unit (32).

8. The processing and control deice according to any of the preceding claims, wherein the device is configured for analyzing one or more successive instances of image data, thereby preferably calculating feature values as an average over multiple instances of image data, e.g. from 50 to 100 successively captured image data instances.

9. The processing and control device according to any of the preceding claims, wherein the data processing unit (32) comprises a preferably machine-learning based classification unit (32b), configured for processing features extracted from the image data (40) and calculate the classification outcome (42) based thereon.

10. The processing and control device according to claim 9, wherein the classification unit (32b) comprises a neural network that is pre-trained for generating classification outcomes when provided with features as an input.

11. The processing and control device according to claim 9 or 10, wherein the classification unit (32b) is pre-trained in a supervised or unsupervised manner and/or wherein data sources may have been used as label data, including human expert label data, additional test data, and/or other data.

12. The processing and control device according to any of claim 9 to 11, wherein the classification unit (32b) comprises one or more training algorithms configured for training the classification unit in advance of normal operation of the tube manufacturing device, wherein the training algorithms are preferably further designed to periodically re-train the classification unit, based on data retrieved during normal operation of the tube manufacturing device (100).

13. The processing and control device according to any of the preceding claims, wherein the classification outcome (42) may, for example, comprises one or more of the following:
- a binary good/poor classification, indicating whether the seam region in any given example of image data is of acceptable quality or not,
- a multivariable binary classification, indicating, for example, for one or more features of the manufactured tube bodies, whether each individual tube body is acceptable or not,
- a non-binary value or "score", e.g. a value between 0 and 1, scoring the overall quality of the seam region and/or of the tube body, and/or
- a multivariable non-binary classification, e.g. a value between 0 and 1 scoring quality of one or more individual features of the manufactured tube bodies.

14. The processing and control device according to any of the preceding claims, wherein the control unit (33) of the device (30) comprises one or more process parameter adjustment algorithms (33a) for adjusting current process parameters and/or for outputting target process parameters of the tube manufacturing device based at least in part on the classification outcome (42).

15. The processing and control device according to claim 14, wherein the process parameter adjustment algorithms (33a) comprise at least one of the following of
- a neural network which is pre-trained for generating modifications to process parameters of the tube manufacturing device based on an input of a classification outcome, alongside inputs of other data that may be available,
- a heuristic algorithm which is pre-defined to find improved but non-optimal process parameters given the current classification outcome and current process parameters, and/or
- an empirical model or digital twin of the tube manufacturing device, where the relationships between variables of the empirical model or digital twin are preferably associated with classification outcomes in a prior training phase.

16. The processing and control device according to any of the preceding claims, wherein the control unit (33) of the device comprises a warning trigger algorithm (33b) which configured for outputting a warning signal to a user interface of the device, dependent on a classification outcome.

17. The processing and control device according to claim 16, wherein the warning trigger algorithm (33b) comprises a machine-learning based algorithm, a non-adaptive programmatic algorithm, and/or wherein the warning trigger algorithm runs on multiple successive generated classification outcomes, in order to enhance its analysis.

18. The proceeding and control device according to any of the preceding claims, wherein the control unit (33) of the device comprises a tube rejection algorithm (33c), which is configured for outputting a rejection signal for a particular tube body (20) or series of tube bodies to the tube manufacturing device (100), dependent on a predefined classification outcome (42).

19. The processing and control device according to claim 19, wherein the device process parameters comprise one or more of the following: control parameters for a heating power for a side seamer unit and/or for a manufacturing speed of the tube machine, mechanical pressure onto the seam during welding/gluing, mechanical pressure onto the seam during cooling, web inlet position, web width settings, and/or side trimming position.

20. A tube manufacturing machine (100) for providing tube bodies (20) from a preferably endless web of tube material by side seaming of the tube material and cutting an endless tubular sleeve (13) into tube bodies (20) of predetermined length, the tube manufacturing machine (100) comprising a process and control device (30) according to any of the preceding claims.

21. A method for controlling a tube manufacturing device (100), preferably a device according to claim 20, the method comprising the steps of:
- providing input data comprising at least image data (40) relating to a cut section (21a,b) of a seam region (10) of tube bodies (20) manufactured by the device (100) to a data processing unit (32),
- providing process data (41) encompassing device process parameters (41a) of the tube manufacturing device and/or optional tube body test data (41b) to the data processing unit (32),
- processing the image data (40) together with additional process data (41) and calculating a classification outcome (42) based on this data,
- processing the classification outcome (42) by a control unit (33) and controlling the tube manufacturing device (100) dependent on the classification outcome.
